# EUROPÄISCHE PATENTANMELDUNG

(11) **EP 4 130 579 A1**
(43) Veröffentlichungstag der Anmeldung: **08.02.2023**
(21) Anmeldenummer: 22184586.0
(22) Anmeldetag: 13.07.2022
(51) Int. Cl.: F24C 15/00, F24C 15/34, H05B 6/64, A47J 37/06

(54) **VERFAHREN ZUR HERSTELLUNG EINES GARGERÄTS UND GARGERÄT**

(30) Priorität: 02.08.2021 DE 102021120020
(71) Anmelder: Miele & Cie. KG, 33332 Gütersloh (DE)
(72) Erfinder: Blömker, Olaf, 48231 Warendorf (DE)

(57) **Zusammenfassung**

Die Erfindung betrifft ein Verfahren zur Herstellung eines Gargeräts (2) mit einem Gehäuse (4), mit einem in dem Gehäuse (4) angeordneten Garraum (8) und mindestens einer eine Lichtquelle (16) und einen Lichtleiter (12) aufweisenden Garraumleuchte (10) zur Beleuchtung des Garraums (8), wobei das Verfahren die folgenden Verfahrensschritte aufweist:
- in einem ersten Schritt:
Montage mindestens eines ersten Teils (22) des Lichtleiters (12) an einer den Garraum (8) begrenzenden Seitenwand (7) des Garraums (8), derart, dass das erste Teil (22) mit einer Lichtauskoppelfläche (18) des ersten Teils (22) einem Beleuchtungsbereich (20) in dieser Seitenwand (6) zugeordnet angeordnet ist,
- in einem zweiten Schritt:
Montage einer thermischen Isolierung (42) derart, dass die thermische Isolierung (42) in dem fertigmontierten Zustand des Gargeräts (2) wenigstens zwischen dieser Seitenwand (6) und dem Gehäuse (4) angeordnet ist,
- in einem dritten Schritt:
Montage einer Elektronikeinheit (38) des Gargeräts (2) oberhalb des Garraums (8), wobei die Elektronikeinheit (38) in einem Montagezustand der Elektronikeinheit (38) das erste Teil (22) bis auf eine dem (den) ersten Teil(en) (22) zugeordnete Öffnung(en) (40) in der Elektronikeinheit (38) im Wesentlichen überdeckt,
- in einem vierten Schritt:
Montage mindestens eines eine Lichteinkoppelfläche (14) zur Einkopplung von sichtbarem Licht der Lichtquelle (16) in den Lichtleiter (12) aufweisenden zweiten Teils (24) des Lichtleiters (12) von oben durch die zu dem (den) ersten Teil(en) (22) korrespondierende(n) Öffnung(en) (40) in der Elektronikeinheit (38), derart, dass eine zweite Lichtweiterleitungsfläche (28) des zweiten Teils (24) in einem Montagezustand des zweiten Teils (24) lichtübertragend und mit Abstand zu einer ersten Lichtweiterleitungsfläche (26) des ersten Teils (22) der ersten Lichtweiterleitungsfläche (26) gegenüberliegend montiert ist.

Ferner betrifft die Erfindung ein Gargerät (2).

## Beschreibung

Die Erfindung betrifft ein Verfahren zur Herstellung eines Gargeräts und ein Gargerät mit einem Garraum und mindestens einer Garraumleuchte.

Derartige Verfahren und Gargeräte sind aus dem Stand der Technik in einer Vielzahl von Ausführungsformen bereits vorbekannt. Die bekannten Gargeräte umfassen ein Gehäuse, einen in dem Gehäuse angeordneten und von Garraumwänden begrenzten Garraum, und mindestens eine zwischen mindestens einer der Garraumwände und dem Gehäuse angeordnete Garraumleuchte, wobei die Garraumleuchte einen Lichtleiter mit einer Lichteinkoppelfläche zur Einkopplung von sichtbaren Licht mindestens einer Lichtquelle der Garraumleuchte in den Lichtleiter und einer Lichtauskoppelfläche zur Beleuchtung des Garraums aufweist, und wobei in der dieser Garraumleuchte zugeordneten Garraumwand ein zu der Lichtauskoppelfläche korrespondierender Beleuchtungsbereich angeordnet ist.

In der DE 10 2014 203 530 A1 ist beispielsweise die Verwendung eines einzigen, stabförmigen Lichtleiters beschrieben, der in eine Ausbauchung in der Seitenwand des Garraums eintaucht.

Die DE 10 2015 225 992 A1 offenbart ein Speisenbehandlungsgerät, in dessen Muffel in der Seitenwand eine Ausbeulung oder Vertiefung angeordnet ist. Dort ist ein Lichtverteilelement eingesetzt. Das Lichtverteilelement wird mit Licht aus einem Lichtleiter angestrahlt, der vor der Ausbeulung oder Vertiefung endet. Dazu ist die Ausbeulung oder Vertiefung mit einem Durchbruch versehen.

Bei einem aus der De 10 2016 010 198 A1 bekannten Haushaltsbackofen sind zwischen einem Lichtaustrittsfenster in einer Muffelseitenwand und einer Lichtquelle auf einer Leiterplatte ein Linsenelement, eine Lichtleitstruktur und ein Fensterelement angeordnet.

Der Erfindung stellt sich somit das Problem, ein Verfahren zur Herstellung eines Gargeräts und ein Gargerät mit einem Garraum und mindestens einer Garraumleuchte zu verbessern.

Erfindungsgemäß wird dieses Problem durch ein Verfahren mit den Merkmalen des Patentanspruchs 1 gelöst, nämlich durch ein Verfahren zur Herstellung eines Gargeräts mit einem Gehäuse, mit einem in dem Gehäuse angeordneten Garraum und mindestens einer eine Lichtquelle und einen Lichtleiter aufweisenden Garraumleuchte zur Beleuchtung des Garraums, wobei das Verfahren die folgenden Verfahrens- oder Montageschritte aufweist: In einem ersten Schritt die Montage mindestens eines ersten Teils des Lichtleiters an einer den Garraum begrenzenden Seitenwand des Garraums, derart, dass das erste Teil mit einer Lichtauskoppelfläche des ersten Teils einem Beleuchtungsbereich in dieser Seitenwand zugeordnet angeordnet ist; in einem zweiten Schritt die Montage einer thermischen Isolierung derart, dass die thermische Isolierung in dem fertigmontierten Zustand des Gargeräts wenigstens zwischen dieser Seitenwand und dem Gehäuse angeordnet ist; in einem dritten Schritt die Montage einer Elektronikeinheit des Gargeräts oberhalb des Garraums, wobei die Elektronikeinheit in einem Montagezustand der Elektronikeinheit das erste Teil bis auf eine dem (den) ersten Teil(en) zugeordnete Öffnung(en) in der Elektronikeinheit im Wesentlichen überdeckt; in einem vierten Schritt die Montage mindestens eines eine Lichteinkoppelfläche zur Einkopplung von sichtbarem Licht der Lichtquelle in den Lichtleiter aufweisenden zweiten Teils des Lichtleiters von oben durch die zu dem (den) ersten Teil(en) korrespondierende(n) Öffnung(en) in der Elektronikeinheit, derart, dass eine zweite Lichtweiterleitungsfläche des zweiten Teils in einem Montagezustand des zweiten Teils lichtübertragend und mit Abstand zu einer ersten Lichtweiterleitungsfläche des ersten Teils der ersten Lichtweiterleitungsfläche gegenüberliegend montiert ist.

Die Aufzählung der vier Schritte soll bedeuten, dass diese Schritte bezüglich der Nummerierung in der Montagefolge nacheinander stattfinden, beispielsweise Schritt zwei nach Schritt eins. Sie soll nicht bedeuten, dass zwischen zwei Schritten, die hinsichtlich der Nummerierung aufeinanderfolgen, nicht ein weiterer Montageschritt eingefügt sein kann. Beispielsweise könnte zwischen dem zweiten Schritt und dem dritten Schritt als Zwischenschritt die Montage von weiteren Gehäuseteilen stattfinden.

Ferner wird das erfindungsgemäße Problem durch ein Gargerät mit den Merkmalen des Patentanspruchs 7 gelöst, das dadurch gekennzeichnet ist, dass der Lichtleiter als ein aus einem ersten Teil und einem zweiten Teil gebildeter zweiteiliger Lichtleiter ausgebildet ist, wobei das erste Teil des Lichtleiters eine erste Lichtweiterleitungsfläche und die dem Garraum zugewandte Lichtauskoppelfläche und das zweite Teil des Lichtleiters die der Lichtquelle zugewandte Lichteinkoppelfläche und eine zweite Lichtweiterleitungsfläche aufweisen, und wobei die erste Lichtweiterleitungsfläche und die zweite Lichtweiterleitungsfläche zur Einkopplung des Lichts von dem zweiten Teil in das erste Teil lichtübertragend und voneinander beabstandet einander gegenüberliegend angeordnet sind. Das erfindungsgemäße Gargerät kann dabei beispielsweise als ein Backofen, ein Dampfgarer, ein Mikrowellengerät oder als ein Kombinationsgerät mit einer Mehrzahl von voneinander verschiedenen Beheizungsarten ausgebildet sein. Das erfindungsgemäße Gargerät kann ferner als ein sogenanntes Pyrolysegerät, also ein Gargerät mit einer Selbstreinigungsfunktion, ausgestattet sein. Darüber hinaus kann das erfindungsgemäße Gargerät als ein Haushaltsgerät oder als ein gewerbliches Gerät, also als ein Gargerät für den professionellen Einsatz, ausgebildet sein. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass ein Verfahren zur Herstellung eines Gargeräts und ein Gargerät mit einem Garraum und mindestens einer Garraumleuchte verbessert sind. Aufgrund der erfindungsgemäßen Ausbildung des Verfahrens und des Gargeräts ist zum einen eine qualitativ und quantitativ gute und zum anderen energieeffiziente Beleuchtung des Garraums ermöglicht. Darüber hinaus ist die Konstruktion und die Fertigung des erfindungsgemäßen Gargeräts, insbesondere in Bezug auf die mindestens eine Garraumleuchte, wesentlich vereinfacht. Da die Lichtquelle der Garraumleuchte oberhalb des Garraums und das erste Teil des Lichtleiters der Garraumleuchte seitlich des Garraums in dem Gehäuse angeordnet sind, ist es darüber hinaus möglich, die Lichtquelle und eine dazu korrespondierende Elektronik der Garraumleuchte außerhalb eines Heißbereichs in einem Kaltbereich des Gargeräts anzuordnen. Ferner kann die Lichtquelle und deren Elektronik mit einer beispielsweise in der Elektronikeinheit integrierten übrigen Elektronik des Gargeräts baulich und/oder schaltungstechnisch kombiniert werden. Entsprechend ergeben sich bauliche und/oder schaltungstechnische Vorteile, die beispielsweise zu einer Reduzierung der Bauteilanzahl und/oder zu einer Einsparung von Bauraum führen können.

In einer vorteilhaften Weiterbildung des erfindungsgemäßen Verfahrens ist das mindestens eine erste Teil des Lichtleiters in einer Auswölbung der Seitenwand angeordnet. Hierdurch ergibt sich einerseits ein platzsparender Aufbau, andererseits ist das erste Teil des Lichtleiters vor Kollisionen beim Einschubvorgang eines Gargutträgers in den Garraum geschützt.

Es ist auch zweckmäßig, wenn die thermische Isolierung mindestens einen Durchbruch oder eine Öffnung aufweist, die in einem Montagezustand der thermischen Isolierung eine Öffnung in der Auswölbung freigibt.

Eine besonders vorteilhafte Weiterbildung des erfindungsgemäßen Verfahrens sieht vor, dass die einander gegenüberliegenden ersten und zweiten Lichtweiterleitungsflächen derart ausgebildet und voneinander beabstandet angeordnet werden, dass zum einen die Lichtübertragung und zum anderen eine Kollisionsfreiheit von dem ersten mit dem zweiten Teil in jedem Betriebszustand des Gargeräts gewährleistet ist. Hierdurch ist ein Toleranzausgleich ermöglicht, so dass ungewünschte mechanische Spannungen in dem Bereich der Lichtweiterleitungsflächen des Lichtleiters und möglicherweise Beschädigungen des Lichtleiters und damit der Garraumleuchte wirksam verhindert sind. Entsprechend sieht eine besonders vorteilhafte Weiterbildung des erfindungsgemäßen Gargeräts vor, dass die einander gegenüberliegenden ersten und zweiten Lichtweiterleitungsflächen derart ausgebildet und voneinander beabstandet angeordnet sind, dass zum einen die Lichtübertragung und zum anderen eine Kollisionsfreiheit von dem ersten mit dem zweiten Teil in jedem Betriebszustand des Gargeräts gewährleistet ist.

Eine weitere vorteilhafte Weiterbildung des erfindungsgemäßen Verfahrens sieht vor, dass die Garraumleuchte einen Halterahmen für das erste Teil des Lichtleiters aufweist, wobei das erste Teil zunächst mit dem Halterahmen kraft- und/oder formschlüssig verbunden wird und anschließend mittels des Halterahmens mit der korrespondierenden Seitenwand und/oder mit dem Gehäuse kraft- und/oder formschlüssig verbunden wird. Auf diese Weise ist die Konstruktion und die Fertigung des erfindungsgemäßen Gargeräts mit der mindestens einen Garraumleuchte zusätzlich vereinfacht. Aufgrund dieser Weiterbildung ist es möglich, dass das erste Teil des Lichtleiters auf dessen Funktion, nämlich die Beleuchtung des Garraums, optimiert ausgebildet werden kann, während die Halterung des ersten Teils an der Seitenwand und/oder dem Gehäuse im Wesentlichen mittels des Halterahmens erfolgt. Beispielsweise können das erste Teil des Lichtleiters und der Halterahmen zueinander korrespondierende Rastmittel aufweisen, so dass das erste Teil ohne nennenswerten konstruktiven und fertigungstechnischen Aufwand an dem Halterahmen halterbar ist. Entsprechend sind Ausführungsformen für das erste Teil denkbar, bei denen das erste Teil keine für die Halterung des ersten Teils an dem Halterahmen spezifischen konstruktiven Merkmale aufweisen muss.

Eine andere vorteilhafte Weiterbildung des erfindungsgemäßen Verfahrens sieht vor, dass vor der Montage des zweiten Teils eine Einführhilfe für das zweite Teil des Lichtleiters derart direkt oder indirekt an dem ersten Teil montiert wird, dass die erste Lichtweiterleitungsfläche des ersten Teils bei einer Montage des zweiten Teils mittels der Einführhilfe mit der zweiten Lichtweiterleitungsfläche des zweiten Teils im Wesentlichen ohne Sicht auf die Einführhilfe lichtübertragend verbindbar ist. Hierdurch ist die Montage der Garraumleuchte, nämlich die Montage des zweiten Teils des Lichtleiters der Garraumleuchte, wesentlich vereinfacht.

Eine weitere besonders vorteilhafte Weiterbildung des erfindungsgemäßen Verfahrens sieht vor, dass die mindestens eine Garraumleuchte als zwei Garraumleuchten ausgebildet ist, wobei die beiden Garraumleuchten an einander gegenüberliegenden Seitenwänden des Garraums angeordnet werden. Auf diese Weise ist die Beleuchtung des Garraums mittels der Garraumleuchten wesentlich homogenisiert und damit zusätzlich verbessert. Entsprechend sieht eine weitere besonders vorteilhafte Weiterbildung des erfindungsgemäßen Gargeräts vor, dass die mindestens eine Garraumleuchte als zwei Garraumleuchten ausgebildet ist, wobei die beiden Garraumleuchten an als einander gegenüberliegende Seitenwände ausgebildeten Garraumwänden angeordnet sind.

Das erfindungsgemäße Gargerät ist nach Art, Funktionsweise, Material und Dimensionierung in weiten geeigneten Grenzen frei wählbar. Siehe hierzu auch die diesbezüglichen Ausführungen in der Beschreibungseinleitung.

Eine andere vorteilhafte Weiterbildung des erfindungsgemäßen Gargeräts sieht vor, dass das erste Teil des Lichtleiters der Garraumleuchte eine im Vergleich zu dem zweiten Teil größere Querschnittsfläche, bevorzugt eine mindestens fünfmal so große Querschnittsfläche wie das zweite Teil, aufweist. Hierdurch ist einerseits eine weitgehende thermische Entkopplung des ersten Teils von dem zweiten Teil und andererseits eine sehr gute Beleuchtung des Garraums mittels der Garraumleuchte ermöglicht.

Eine vorteilhafte Weiterbildung der vorgenannten Weiterbildung des erfindungsgemäßen Gargeräts sieht vor, dass die Lichtauskoppelfläche als eine im Wesentlichen rechteckige Fläche ausgebildet ist, bevorzugt, dass sich die Lichtauskoppelfläche mindestens über 30% der Höhe des Garraums erstreckt. Auf diese Weise ist die Beleuchtung des Garraums mittels der Garraumleuchte weiter verbessert. Dies gilt insbesondere bei in den Garraum eingeschobenen Gargutträgern zur Aufnahme eines Garguts. Die Formulierung "im Wesentlichen rechteckige" meint hier, dass die vorgenannte Lichtauskoppelfläche beispielsweise auch an den Ecken verrundet ausgebildet sein kann.

Eine weitere vorteilhafte Weiterbildung des erfindungsgemäßen Gargeräts sieht vor, dass das zweite Teil des Lichtleiters der Garraumleuchte als ein Lichtleiterstab, bevorzugt als ein Kreiszylinder, ausgebildet ist, wobei die Lichteinkoppelfläche an der einen Stirnseite und die zweite Lichtweiterleitungsfläche an der anderen Stirnseite des Lichtleiterstabs angeordnet sind. Hierdurch ist das zweite Teil des Lichtleiters zum einen funktional und zum anderen sehr platzsparend ausgebildet. Dies gilt insbesondere für die bevorzugte Ausführungsform dieser Weiterbildung. Darüber hinaus ist es bei entsprechend kleiner Dimensionierung des Querschnitts des Lichtleiterstabs möglich, erforderliche Gehäuseöffnungen in dem Gehäuse zur Hindurchführung des Lichtleiterstabs, beispielsweise die Öffnung in der Elektronikeinheit, sehr klein auszuführen. Entsprechend ist eine sehr gute Wärmedämmung, beispielsweise durch die Entkopplung des oben genannten Kaltbereichs von dem oben genannten Heißbereich, ermöglicht. Bei eine Mikrowellenfunktion aufweisenden erfindungsgemäßen Gargeräten ist dadurch zusätzlich eine erforderliche Mikrowellendichtigkeit des Gargeräts sehr einfach realisierbar.

Eine andere vorteilhafte Weiterbildung des erfindungsgemäßen Gargeräts sieht vor, dass das erste Teil und/oder das zweite Teil jeweils als ein Glasteil ausgebildet sind/ist, bevorzugt, dass das erste Teil und/oder das zweite Teil jeweils als ein Borosilikatglasteil ausgebildet sind/ist. Auf diese Weise ist das erste Teil und/oder das zweite Teil aus für die Funktion des Lichtleiters besonders vorteilhaftem Material ausgebildet. Dies gilt besonders für die bevorzugte Ausführungsform dieser Weiterbildung und insbesondere mit Blick auf die Ausbildung des zweiten Teils des Lichtleiters aus Borosilikatglas, da das zweite Teil üblicherweise in einem Heißbereich des Gargeräts angeordnet ist.

Ein Ausführungsbeispiel der Erfindung ist in den Zeichnungen rein schematisch dargestellt und wird nachfolgend näher beschrieben. Es zeigt
- Figur 1: einen ersten Teil 22 eines Lichtleiters 12 mit einem Halterahmen 32 in Explosionsdarstellung;
- Figur 2: einen Garraum 8 in einer perspektivischen Innenansicht mit dem ersten Teil 22 des Lichtleiters 12 vor dem Einsetzen;
- Figur 3: den Garraum 8 in einer anderen perspektivischen Darstellung mit eingesetzten ersten Teilen 22 des Lichtleiters 12;
- Figur 4: ein teilmontiertes Gargerät 2 mit Garraum 8 und Gehäuse 4 vor dem Montieren des linken zweiten Teils 24 des Lichtleiters 12 mit Lichtquelle 16;
- Figur 5: einen Garraum mit montierten zweiten Teilen 24 der Lichtleiter 12 mit Lichtquellen 16;
- Figur 6: einen Schnitt durch das erfindungsgemäße Gargerät 2 nach der Montage der Garraumleuchten 12;
- Figur 8: einen weiteren Schnitt durch das erfindungsgemäße Gargerät 2 im Bereich der Lichterweiterungsflächen 26 und 28;

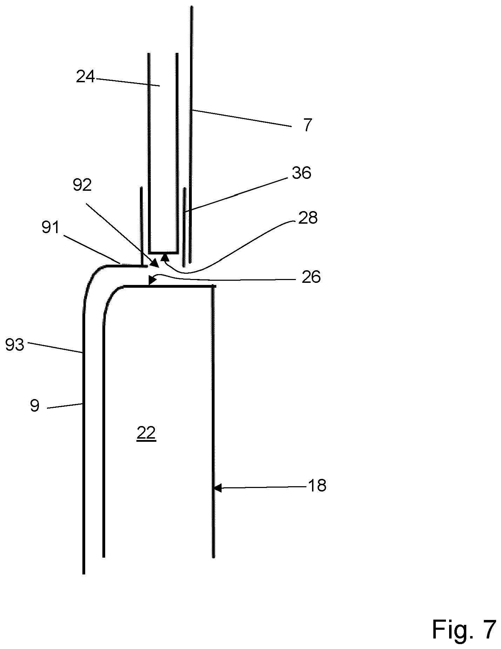

- Figur 7: eine perspektivische Darstellung des erfindungsgemäßen Gargeräts 2 nach der Montage der Garraumleuchten 12.

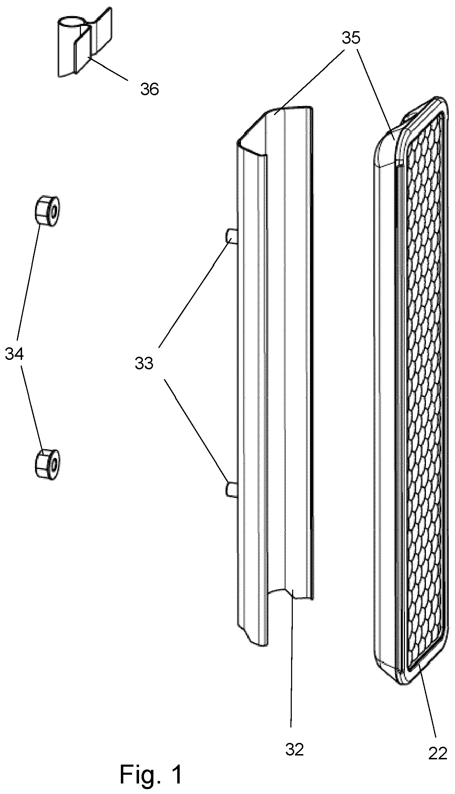

In den Figuren 1 bis 8 ist ein Ausführungsbeispiel des erfindungsgemäßen Gargeräts bzw. Teile davon zu unterschiedlichen Schritten des Montageprozesses als erfindungsgemäßes Verfahren rein exemplarisch dargestellt. Alle Ortsangaben wie vorn, hinten, oben, unten rechts und links beziehen sich auf die dargestellten Ausführungsformen in den Zeichnungen.

Das Gargerät 2 ist als ein Haushaltsbackofen, insbesondere mit Pyrolysefunktion, ausgebildet und umfasst ein Gehäuse 4, einen in dem Gehäuse 4 angeordneten und von Garraumwänden 6 begrenzten Garraum 8, von denen zwei als Seitenwände 7 ausgebildet sind. In den Seitenwänden 7 sind vom Garrauminneren gesehen Auswölbungen 9 nach außen angeordnet, die jeweils Teile von später beschriebenen Garraumleuchten 10 aufnehmen. Dabei weist die jeweilige Garraumleuchte 10 einen Lichtleiter 12 mit einer Lichteinkoppelfläche 14 zur Einkopplung von sichtbaren Licht einer mindestens eine LED aufweisenden Lichtquelle 16 der Garraumleuchte 10 in den Lichtleiter 12 und einer Lichtauskoppelfläche 18 zur Beleuchtung des Garraums 8 auf. Die jeweilige Garraumleuchte 10 bildet so in ihrer zugeordneten Seitenwand 7 einen zu der jeweiligen Lichtauskoppelfläche 18 korrespondierenden Beleuchtungsbereich 20. Das sichtbare Licht ist in den Figuren 1 bis 8 nicht dargestellt.

Erfindungsgemäß ist der jeweilige Lichtleiter 12 als ein aus einem ersten Teil 22 in Form eines Kollimators und einem zweiten, stabförmigen Teil 24 als zweiteiliger Lichtleiter ausgebildet, wobei das erste Teil 22 des Lichtleiters 12 eine erste Lichtweiterleitungsfläche 26 und die dem Garraum 8 zugewandte Lichtauskoppelfläche 18 und das zweite Teil 24 des Lichtleiters 12 die der Lichtquelle 16 zugewandte Lichteinkoppelfläche 14 und eine zweite Lichtweiterleitungsfläche 28 aufweisen, und wobei die erste Lichtweiterleitungsfläche 26 und die zweite Lichtweiterleitungsfläche 28 zur Einkopplung des Lichts von dem zweiten Teil 24 in das erste Teil 22 lichtübertragend und voneinander beabstandet einander gegenüberliegend angeordnet sind. Die einander gegenüberliegenden ersten und zweiten Lichtweiterleitungsflächen 26, 28 sind bei dem vorliegenden Ausführungsbeispiel derart ausgebildet und voneinander beabstandet angeordnet, dass zum einen die Lichtübertragung und zum anderen eine Kollisionsfreiheit von dem ersten mit dem zweiten Teil 22, 24 in jedem Betriebszustand des Gargeräts 2 gewährleistet ist.

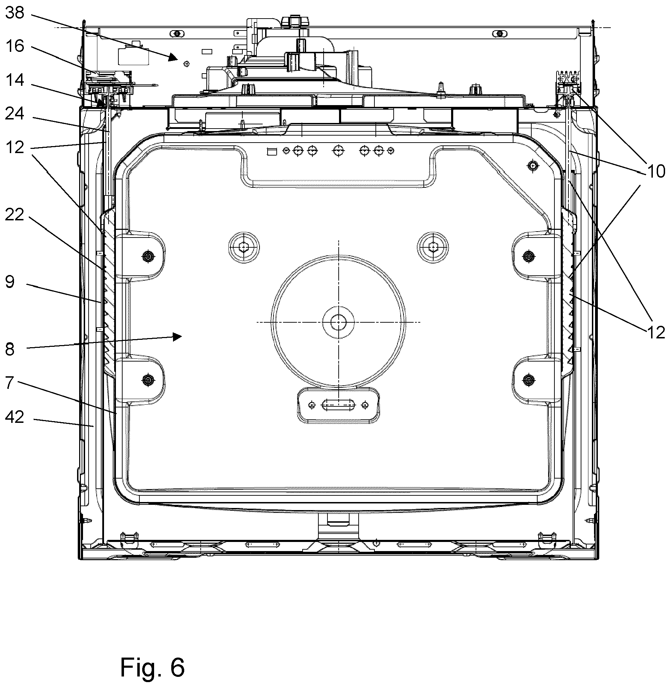

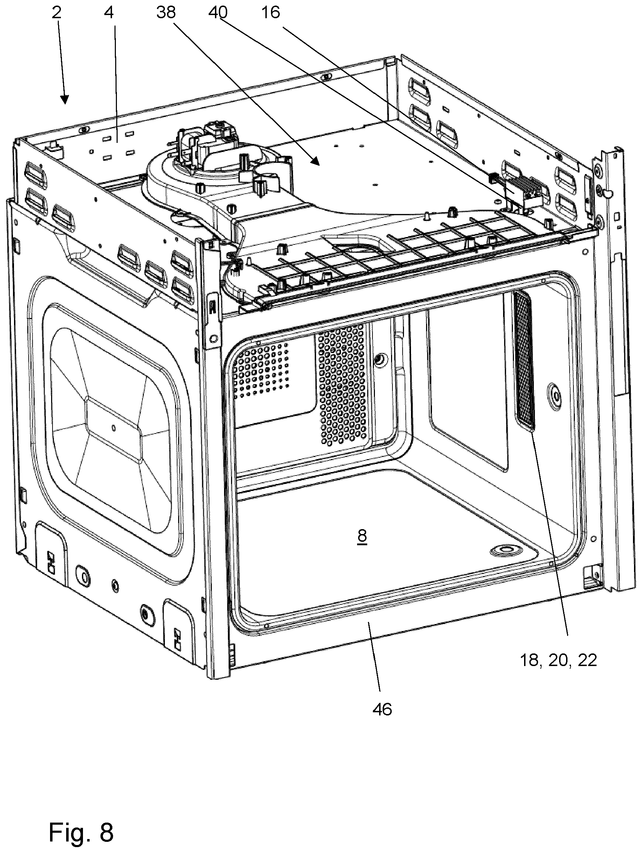

Wie aus den Figuren 6 und 8 hervorgeht, sind die Lichtquellen 16 der jeweiligen Garraumleuchte 10 jeweils oberhalb des Garraums 8 und die ersten Teile 22 der Lichtleiter 12 der jeweiligen Garraumleuchte 10 seitlich in den Auswölbungen 9 der Garraumseitenwände 7 angeordnet. In einem fertigmontierten Zustand des Gargeräts 2 ist zwischen der jeweiligen als Seitenwand 7 ausgebildeten Garraumwand 6 und dem Gehäuse 4 jeweils eine thermische Isolierung 42 angeordnet, siehe Figur 6. Entsprechend sind die Lichtquellen 16 mit einer nicht dargestellten Elektronik der jeweiligen Lichtquelle 16 in einem im Vergleich zu den ersten Teilen 22 des jeweiligen Lichtleiters 12 wesentlich kühleren Bereich des Gargeräts 2 angeordnet. Dieser kühlere Bereich kann somit auch als Kaltbereich des Gargeräts 2 bezeichnet werden. Im Unterschied dazu ist das jeweilige erste Teil 22 des Lichtleiters 12 entsprechend in einem Heißbereich des Gargeräts 2 angeordnet. Das zweite Teil 24 des Lichtleiters 12 der jeweiligen Garraumleuchte 10 ist als ein Lichtleiterstab, nämlich als ein langgestreckter Kreiszylinder, ausgebildet, wobei die Lichteinkoppelfläche 14 an einer Stirnseite und die zweite Lichtweiterleitungsfläche 28 an einer anderen Stirnseite des Lichtleiterstabs 24 angeordnet sind. Das erste Teil 22 des Lichtleiters 12 der jeweiligen Garraumleuchte 10 weist eine im Vergleich zu dem jeweils korrespondierenden zweiten Teil 24 größere Querschnittsfläche, nämlich eine mindestens fünfmal so große Querschnittsfläche wie das jeweilige zweite Teil 24, auf. Ferner ist die jeweilige Lichtauskoppelfläche 18 als eine im Wesentlichen rechteckige Fläche ausgebildet, wobei sich die jeweilige Lichtauskoppelfläche 18 mindestens über 30% der Höhe des Garraums 8 erstreckt. Die Ausbildung des jeweiligen zweiten Teils 24 als ein Lichtleiterstab ermöglicht, bei entsprechend kleiner Dimensionierung des Querschnitts des Lichtleiterstabs 24, erforderliche Gehäuseöffnungen in dem Gehäuse 4 zur Hindurchführung des Lichtleiterstabs 24 sehr klein auszuführen. Entsprechend ist zum einen eine sehr gute Wärmedämmung, beispielsweise durch die Entkopplung des oben genannten Kaltbereichs von dem oben genannten Heißbereich ermöglicht. Zum anderen ist hierdurch die Forderung nach einer Mikrowellendichtigkeit von als Mikrowellengerät ausgebildeten Gargeräten leichter erfüllbar.

Bei dem vorliegenden Ausführungsbeispiel sind die ersten Teile 22 und die zweiten Teile 24 jeweils als ein Glasteil ausgebildet, wobei wenigstens die ersten Teile 22 zwecks Hitzebeständigkeit jeweils als ein Borosilikatglasteil ausgebildet sind.

Die beiden an den gegenüberliegenden Seitenwänden 7 befindlichen Garraumleuchten 10 sind hier zum einen zueinander analog ausgebildet und zum anderen zueinander korrespondierend an dem Garraum 8 angeordnet. Die obigen Ausführungen beziehen sich somit auf beide Garraumleuchten 10. Ferner können die Garraumleuchten 10 hierdurch weitestgehend aus Gleichteilen hergestellt werden, lediglich die ersten Teile 22 (Kollimatoren) sind spiegelsymmetrisch ausgebildet, damit sie im Garraum die gleiche Beleuchtungscharakteristik aufweisen. Darüber hinaus reduziert sich dadurch auch die Lagerhaltung und die Logistik.

Im Nachfolgenden wird das erfindungsgemäße Verfahren zur Herstellung des Gargeräts 2 und die Funktionsweise des erfindungsgemäßen Gargeräts 2 gemäß dem vorliegenden Ausführungsbeispiel anhand der Figuren 1 bis 8 erläutert.

Zunächst befindet sich das Gargerät 2 in einem demontierten Zustand, also in einer Demontagelage des Gargeräts 2. Zwecks Überführung des Gargeräts 2 in einen Montagezustand (siehe Figuren 6 und 8), also in eine Montagelage des Gargeräts 2, wird wie folgt verfahren:

Zunächst wird das jeweilige erste Teil 22, wie aus Figur 1 ersichtlich, mit einem Halterahmen 32 form- und kraftschlüssig verbunden. Dazu ist der Halterahmen 32 als Klemmvorrichtung ausgebildet. Hierfür weisen das jeweilige erste Teil 22 und der diesem zugeordnete Halterahmen 32 zueinander korrespondierende, nicht näher dargestellte, Haltemittel auf. Die Haltemittel sind auf dem Fachmann an sich bekannte Art und Weise ausgebildet. Bei dem vorliegenden Ausführungsbeispiel sind diese Haltemittel derart ausgebildet, dass das jeweilige erste Teil 22 im Wesentlichen hierfür keine speziellen konstruktiven Anpassungen aufweist. An der Rückseite des Halteramens sind zwei Gewindestangen 33 befestigt, zu denen zwei Sicherungsmuttern 34 gehören. Die Funktion dieser Teile ist an späterer Stelle erklärt. Des Weiteren zeigt die Figur 1 eine Einführhilfe 36, dessen Funktion auch später erläutert ist. Im gezeigten Ausführungsbeispiel ist das Gargerät 2 mit zwei Garraumleuchten 10 ausgestattet, deswegen bezieht sich die folgende Beschreibung auf eben diese zwei Leuchten 10. Für die Erfindung bzw. das erfindungsgemäße Verfahren zur Herstellung des Gargeräts 2 ist es aber unerheblich, ob eine oder zwei Garraumleuchten 10 zum Einsatz kommen.

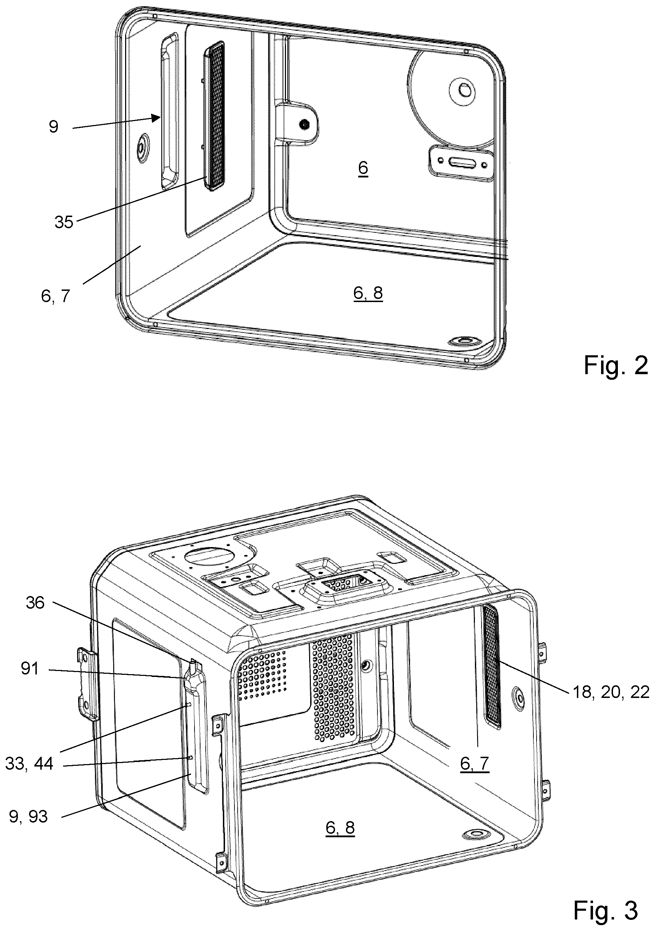

Nachdem die jeweiligen ersten Teile 22 mit den dazu korrespondierenden Halterahmen 32 auf die erläuterte Art und Weise verbunden worden sind, werden die dadurch gebildeten Baueinheiten 35 in Auswölbungen 9 der jeweils korrespondierenden Seitenwand 6 eingesetzt. In der Figur 2 ist die linke Auswölbung 9 und die entsprechende Baueinheit 35 kurz vor dem Einsetzen gezeigt. Die Auswölbungen 9 sind so gestattet, dass sie die Baueinheiten 35 formschlüssig aufnehmen. Nach dem Einsetzen ragen die Gewindestangen 33 der Halterahmen 32 durch dafür vorgesehene Bohrungen 94 in den Stirnflächen 93 der Auswölbungen 9. Siehe hierzu Figur 3. Anschließend werden die Sicherungsmuttern 34 auf die Gewindestangen geschraubt (in den Zeichnungen nicht dargestellt) und die Baueinheiten 35 sind dadurch in den Auswölbungen 9 befestigt.

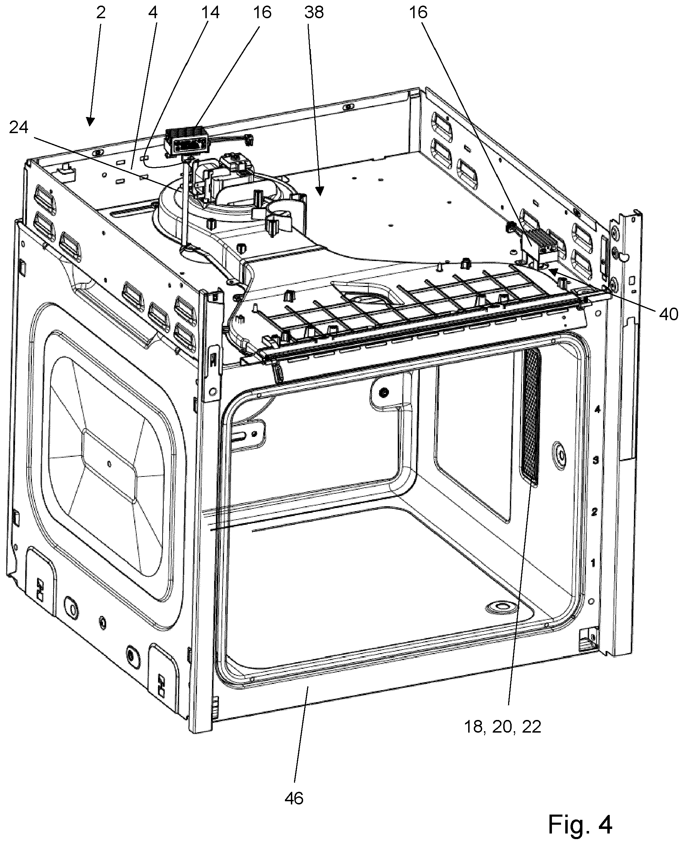

Danach werden bei dem vorliegenden Ausführungsbeispiel die bereits in Figur 1 gezeigten Einführhilfen 36 der jeweiligen Garraumleuchte 10 zugeordnet. Im gezeigten Ausführungsbeispiel erfolgt dies dadurch, dass die Einführhilfen 36 oberhalb von Öffnungen 92 in den oberen Deckflächen 91 der Auswölbungen 9 an der jeweiligen Seitenwand 7 befestigt werden, beispielsweise durch Schweißen (siehe Figur 7). Alternativ können die Einführhilfen auch direkt an den Auswölbungen 9 befestigt sein. Die Einführhilfen 36 bieten nicht nur eine Erleichterung bei der Montage der zweiten, stabförmigen Teile 24 der Lichtleiter 12, sie sorgen durch ihre Ausbildung als langgestreckte Röhrchen bei entsprechenden Dimensionierung auch für die Mikrowellendichtigkeit der Öffnungen 92 in den Auswölbungen 9. Zum Abschluss dieses ersten Montageschritts sind also die ersten Teile 12 der Lichtleiter an einer den Garraum 8 begrenzenden Seitenwand 6 derart befestigt, dass das erste Teil 22 mit einer Lichtauskoppelfläche 18 einem Beleuchtungsbereich 20 in dieser Seitenwand 6 angeordnet ist. Insbesondere ist nach dem Abschluss dieses ersten Schritts der Garraum hinsichtlich der Garraumbeleuchtung 10 fertig montiert. Dabei ist es für die Ausführung des erfindungsgemäßen Herstellungsverfahrens unerheblich ob der in den Figuren 4, 6 und 8 erkennbare Frontrahmen 46 bereits in diesem ersten Schritt oder in dem darauffolgenden zweiten Schritt montiert wird.

Nach dem Abschluss des ersten Schritts erfolgt in einem zweiten Schritt das Aufbringen einer thermischen Isolierung 42 auf die Außenseite des Garraums 8. Die Isolierung 42 ist lediglich hinsichtlich ihres Anbringungsorts schematisch in der Figur 6 skizziert, ein konkreter Aufbau ist dem Fachmann bekannt und hier nicht näher erläutert. Beispielsweise kann der Garraum 8 mit nicht dargestellten Isoliermatten umwickelt werden, es kann aber auch eine andere, für den jeweiligen Verwendungszweck des Garraums passende Isolierung 42 gewählt werden. Wichtig ist, dass die Isolierung 42 oberhalb der Löcher in der jeweiligen Auswölbung bzw. oberhalb der Einführhilfen Öffnungen oder Durchbrüche besitzt, durch die die stabförmigen zweite Teile 24 der jeweiligen Lichtleiter 12 in die Auswölbungen 9 geführt werden können (in den Zeichnungen nicht dargestellt). Am Ende des zweiten Montageschritts ist die thermische Isolierung 42 so platziert, dass sie in einem fertigmontierten Zustand des Gargeräts 2 jeweils zwischen den Seitenwänden 7 und dem Gehäuse 4 angeordnet ist, siehe Figur 6.

Anschließend erfolgt in einem dritten Schritt die Montage einer Elektronikeinheit 38 des Gargeräts 2 oberhalb des Garraums 8, wobei die Elektronikeinheit 38 in einem Montagezustand der Elektronikeinheit 38 das jeweilige erste Teil 22 bis auf dem jeweiligen ersten Teil 22 zugeordnete Öffnungen 40 in der Elektronikeinheit 38 im Wesentlichen überdeckt. Zuordnung bedeutet hier, dass die Öffnungen 40 senkrecht über den Einführhilfen 46, den Öffnungen 92 in den oberen Deckflächen 91 der Auswölbungen 9 und damit auch senkrecht über den ersten Teilen 22 angeordnet sind. In diesem dritten Schritt können, wie in Figur 4 dargestellt, weitere Gehäuseteile wie Seitenwände 48 oder ein in den Zeichnungen nicht erkennbarer Boden montiert werden.

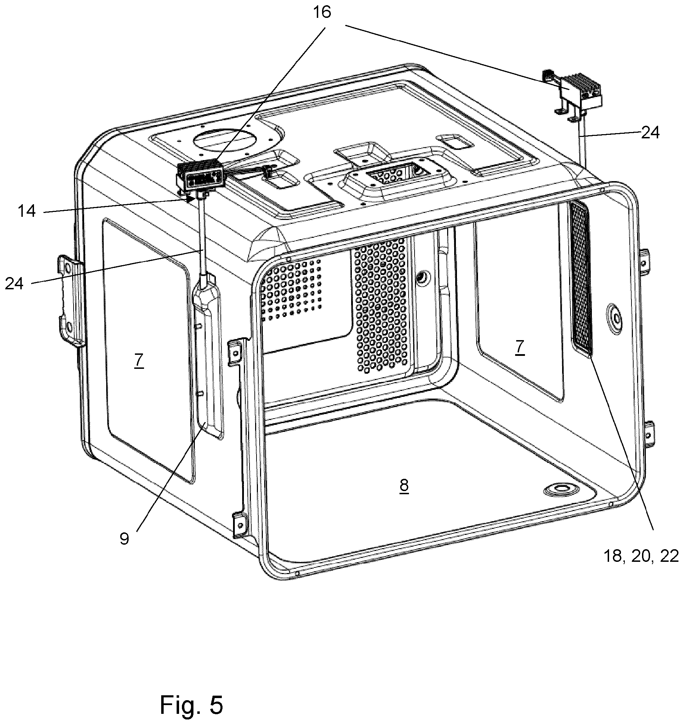

Schließlich werden die zweiten Teile 24, die die Lichteinkoppelflächen 14 zur Einkopplung von sichtbaren Licht der Lichtquelle 16 in den Lichtleiter 12 aufweisen, von oben durch die zu dem jeweiligen ersten Teil 22 korrespondierenden Öffnungen 40 in der Elektronikeinheit 38 gesteckt und weiter in die Einführhilfe geführt. Dabei sind die zweiten Teile hinsichtlich ihrer Länge so dimensioniert, dass sie im montierten Zustand in den Einführhilfen kurz vor den ersten Teilen enden. Dadurch ist die zweite Lichtweiterleitungsfläche 28 des zweiten Teils 24 lichtübertragend und mit Abstand zu der ersten Lichtweiterleitungsfläche 26 des ersten Teils 22 gegenüberliegend montiert. Siehe hierzu die Figur 6. In der Figur 4 ist das links dargestellte zweite Teil 24 vor diesem Montageschritt und das rechte zweite Teil in der Montagelage dargestellt. Figur 5 zeigt die ersten und zweiten Teile 22, 24 in ihrer Montagelage, allerdings ohne Gehäuseteile des Gargeräts 2. Es wird deshalb darauf hingewiesen, dass in Figur 5 kein erfindungsgemäßer Herstellungsschritt gezeigt ist.

Wie oben bereits ausgeführt, werden die einander gegenüberliegenden ersten und zweiten Lichtweiterleitungsflächen 26, 28 derart ausgebildet und voneinander beabstandet angeordnet, dass zum einen die Lichtübertragung und zum anderen eine Kollisionsfreiheit von dem ersten mit dem zweiten Teil 22, 24 in jedem Betriebszustand des Gargeräts 2 gewährleistet ist. Die beiden Garraumleuchten 10 werden, wie oben erläutert und aus den Figuren ersichtlich, an einander gegenüberliegenden Seitenwänden 7 des Garraums 8 angeordnet. Siehe hierzu insbesondere die Fig. 6.

Aufgrund der erfindungsgemäßen Ausbildung des Verfahrens zur Herstellung des Gargeräts 2 und des Gargeräts 2 ist zum einen eine qualitativ und quantitativ gute und zum anderen energieeffiziente Beleuchtung des Garraums 8 ermöglicht. Darüber hinaus ist die Konstruktion und die Fertigung des erfindungsgemäßen Gargeräts 2, insbesondere in Bezug auf die Garraumleuchten 10, wesentlich vereinfacht. Die erläuterte Beabstandung der ersten und der zweiten Lichtweiterleitungsflächen 26, 28 und damit des ersten von dem zweiten Teil 22, 24 des Lichtleiters 12 der jeweiligen Garraumleuchte 10 ermöglicht einen Toleranzausgleich, so dass ungewünschte mechanische Spannungen in dem Bereich der Lichtweiterleitungsflächen 26, 28 des jeweiligen Lichtleiters 12 und möglicherweise Beschädigungen des jeweiligen Lichtleiters 12 und damit der jeweiligen Garraumleuchte 10 wirksam verhindert sind. Da die Lichtquelle 16 der jeweiligen Garraumleuchte 10 oberhalb des Garraums 8 und das erste Teil 22 des Lichtleiters 12 der jeweiligen Garraumleuchte 10 seitlich des Garraums 8 in dem Gehäuse 4 angeordnet sind, ist es darüber hinaus möglich, die jeweilige Lichtquelle 16 und eine dazu korrespondierende Elektronik der Garraumleuchte 10 außerhalb eines Heißbereichs in einem Kaltbereich des Gargeräts 2 anzuordnen. Dies ist bei dem vorliegenden Ausführungsbeispiel besonders vorteilhaft, da es sich bei dem Haushaltsbackofen um ein Pyrolysegerät, also ein Gargerät mit Selbstreinigungsfunktion, handelt. Während der Selbstreinigung des Garraums 8 werden in dem Garraum 8 sehr hohe Temperaturen erreicht. Ferner kann die Lichtquelle und deren Elektronik mit einer beispielsweise in der Elektronikeinheit integrierten übrigen Elektronik des Gargeräts baulich und/oder schaltungstechnisch kombiniert werden. Entsprechend ergeben sich bauliche und/oder schaltungstechnische Vorteile, die beispielsweise zu einer Reduzierung der Bauteilanzahl und/oder zu einer Einsparung von Bauraum führen können. Dies ist jedoch nicht zwingend erforderlich.

Die Erfindung ist nicht auf das vorliegende Ausführungsbeispiel beschränkt. Beispielsweise ist die Erfindung auch bei anderen Gargeräten mit einem Garraum vorteilhaft einsetzbar. Siehe hierzu beispielsweise die diesbezüglichen Ausführungen in der Beschreibungseinleitung. Insbesondere ist das erfindungsgemäße Gargerät nicht auf die konstruktiven und fertigungstechnischen Details des erläuterten Ausführungsbeispiels begrenzt.

Beispielsweise ist die optionale Einführhilfe nach Art, Funktionsweise, Material und Dimensionierung in weiten geeigneten Grenzen frei wählbar. Jedoch sind auch Ausführungsformen der Erfindung möglich, bei denen auf die Verwendung einer Einführhilfe gänzlich verzichtet wird.

### Bezugszeichenliste

- 2: Gargerät
- 4: Gehäuse
- 6: Garraumwände
- 7: Seitenwände
- 8: Garraum
- 9: Auswölbungen
- 10: Garraumleuchte
- 12: Lichtleiter
- 14: Lichteinkoppelfläche
- 16: Lichtquelle
- 18: Lichtauskoppelfläche
- 20: Beleuchtungsbereich
- 22: erster Teil des Lichtleiters (Kollimator)
- 24: zweiter Teil des Lichtleiters (Stab)
- 26: Lichtweiterleitungsfläche im ersten Teil des Lichtleiters
- 28: Lichtweiterleitungsfläche im zweiten Teil des Lichtleiters
- 32: Halterahmen
- 33: Gewindestangen
- 34: Sicherungsmuttern
- 35: Baueinheit aus Halterahmen 32 und erstem Teil 22
- 36: Einführhilfe
- 38: Elektronikeinheit
- 40: Öffnung in der Elektronikeinheit
- 42: thermische Isolierung
- 46: Frontrahmen
- 91: obere Deckfläche der Auswölbung 9
- 92: Öffnung in der Auswölbung 9
- 93: Stirnfläche in der Auswölbung 9
- 94: Bohrungen

## Patentansprüche

1. Verfahren zur Herstellung eines Gargeräts (2) mit einem Gehäuse (4), mit einem in dem Gehäuse (4) angeordneten Garraum (8) und mindestens einer eine Lichtquelle (16) und einen Lichtleiter (12) aufweisenden Garraumleuchte (10) zur Beleuchtung des Garraums (8), wobei das Verfahren die folgenden Verfahrensschritte aufweist:
- in einem ersten Schritt:
Montage mindestens eines ersten Teils (22) des Lichtleiters (12) an einer den Garraum (8) begrenzenden Seitenwand (7) des Garraums (8), derart, dass das erste Teil (22) mit einer Lichtauskoppelfläche (18) des ersten Teils (22) einem Beleuchtungsbereich (20) in dieser Seitenwand (6) zugeordnet angeordnet ist,
- in einem zweiten Schritt:
Montage einer thermischen Isolierung (42) derart, dass die thermische Isolierung (42) in dem fertigmontierten Zustand des Gargeräts (2) wenigstens zwischen dieser Seitenwand (6) und dem Gehäuse (4) angeordnet ist,
- in einem dritten Schritt:
Montage einer Elektronikeinheit (38) des Gargeräts (2) oberhalb des Garraums (8), wobei die Elektronikeinheit (38) in einem Montagezustand der Elektronikeinheit (38) das erste Teil (22) bis auf eine dem (den) ersten Teil(en) (22) zugeordnete Öffnung(en) (40) in der Elektronikeinheit (38) im Wesentlichen überdeckt,
- in einem vierten Schritt:
Montage mindestens eines eine Lichteinkoppelfläche (14) zur Einkopplung von sichtbarem Licht der Lichtquelle (16) in den Lichtleiter (12) aufweisenden zweiten Teils (24) des Lichtleiters (12) von oben durch die zu dem (den) ersten Teil(en) (22) korrespondierende(n) Öffnung(en) (40) in der Elektronikeinheit (38), derart, dass eine zweite Lichtweiterleitungsfläche (28) des zweiten Teils (24) in einem Montagezustand des zweiten Teils (24) lichtübertragend und mit Abstand zu einer ersten Lichtweiterleitungsfläche (26) des ersten Teils (22) der ersten Lichtweiterleitungsfläche (26) gegenüberliegend montiert ist.

2. Verfahren zur Herstellung eines Gargeräts (2) nach Anspruch 1, **dadurch gekennzeichnet, dass** das mindestens eine erste Teil (22) des Lichtleiters (12) in einer Auswölbung (9) der Seitenwand (7) angeordnet ist.

3. Verfahren zur Herstellung eines Gargeräts (2) nach Anspruch 2, **dadurch gekennzeichnet, dass** die thermische Isolierung mindestens einen Durchbruch oder eine Öffnung aufweist, die in einem Montagezustand der thermischen Isolierung eine Öffnung in der Auswölbung freigibt.

4. Verfahren zur Herstellung eines Gargeräts (2) nach mindestens einem der vorhergehenden Ansprüche, **dadurch gekennzeichnet, dass** die einander gegenüberliegenden ersten und zweiten Lichtweiterleitungsflächen (26, 28) derart ausgebildet und voneinander beabstandet angeordnet werden, dass zum einen die Lichtübertragung und zum anderen eine Kollisionsfreiheit von dem ersten mit dem zweiten Teil (22, 24) in jedem Betriebszustand des Gargeräts (2) gewährleistet ist.

5. Verfahren zur Herstellung eines Gargeräts (2) nach mindestens einem der vorhergehenden Ansprüche, **dadurch gekennzeichnet, dass** die Garraumleuchte (10) einen Halterahmen (32) für das erste Teil (22) des Lichtleiters (12) aufweist, wobei das erste Teil (22) zunächst mit dem Halterahmen (32) kraft- und/oder formschlüssig verbunden wird und anschließend mittels des Halterahmens (32) mit der korrespondierenden Seitenwand (7) kraft- und/oder formschlüssig verbunden wird.

6. Verfahren zur Herstellung eines Gargeräts (2) nach mindestens einem der vorhergehenden Ansprüche, **dadurch gekennzeichnet, dass** vor der Montage des zweiten Teils (24) eine Einführhilfe (36) für das zweite Teil (24) des Lichtleiters (12) derart direkt oder indirekt an dem ersten Teil (22) montiert wird, dass die erste Lichtweiterleitungsfläche (26) des ersten Teils (22) bei einer Montage des zweiten Teils (24) mittels der Einführhilfe (36) mit der zweiten Lichtweiterleitungsfläche (28) des zweiten Teils (24) im Wesentlichen ohne Sicht auf die Einführhilfe (36) lichtübertragend verbindbar ist.

7. Gargerät (2), hergestellt nach einem Verfahren gemäß einem der Ansprüche 1 bis 6, umfassend ein Gehäuse (4), einen in dem Gehäuse (4) angeordneten und von Seitenwänden (6) begrenzten Garraum (8), und mindestens eine zwischen mindestens einer der Seitenwände (6) und dem Gehäuse (4) angeordnete Garraumleuchte (10), wobei die Garraumleuchte (10) einen Lichtleiter (12) mit einer Lichteinkoppelfläche (14) zur Einkopplung von sichtbaren Licht mindestens einer Lichtquelle (16) der Garraumleuchte (10) in den Lichtleiter (12) und einer Lichtauskoppelfläche (18) zur Beleuchtung des Garraums (8) aufweist, und wobei in der dieser Garraumleuchte (10) zugeordneten Seitenwand (6) ein zu der Lichtauskoppelfläche (18) korrespondierender Beleuchtungsbereich (20) angeordnet ist, **dadurch gekennzeichnet, dass** der Lichtleiter (12) als ein aus einem ersten Teil (22) und einem zweiten Teil (24) gebildeter zweiteiliger Lichtleiter ausgebildet ist, wobei das erste Teil (22) des Lichtleiters (12) eine erste Lichtweiterleitungsfläche (26) und die dem Garraum (8) zugewandte Lichtauskoppelfläche (18) und das zweite Teil (24) des Lichtleiters (12) die der Lichtquelle (16) zugewandte Lichteinkoppelfläche (14) und eine zweite Lichtweiterleitungsfläche (28) aufweisen, und wobei die erste Lichtweiterleitungsfläche (26) und die zweite Lichtweiterleitungsfläche (28) zur Einkopplung des Lichts von dem zweiten Teil (24) in das erste Teil (22) lichtübertragend und voneinander beabstandet einander gegenüberliegend angeordnet sind.

8. Gargerät (2) nach Anspruch 7, **dadurch gekennzeichnet, dass** das erste Teil (22) des Lichtleiters (12) der Garraumleuchte (10) eine im Vergleich zu dem zweiten Teil (24) größere Querschnittsfläche, bevorzugt eine mindestens fünfmal so große Querschnittsfläche wie das zweite Teil (24), aufweist.

9. Gargerät (2) nach Anspruch 7, **dadurch gekennzeichnet, dass** die Lichtauskoppelfläche (18) als eine im Wesentlichen rechteckige Fläche ausgebildet ist, bevorzugt, dass sich die Lichtauskoppelfläche (18) mindestens über 30% der Höhe des Garraums (8) erstreckt.

10. Gargerät (2) nach einem der Ansprüche 6 bis 8, **dadurch gekennzeichnet, dass** das zweite Teil (24) des Lichtleiters (12) der Garraumleuchte (10) als ein Lichtleiterstab, bevorzugt als ein Kreiszylinder, ausgebildet ist, wobei die Lichteinkoppelfläche (14) an der einen Stirnseite und die zweite Lichtweiterleitungsfläche (28) an der anderen Stirnseite des Lichtleiterstabs (24) angeordnet sind.

11. Gargerät (2) nach einem der Ansprüche 6 bis 9, **dadurch gekennzeichnet, dass** das erste Teil (22) und/oder das zweite Teil (24) jeweils als ein Glasteil ausgebildet sind/ist, bevorzugt, dass das erste Teil und/oder das zweite Teil (24) jeweils als ein Borosilikatglasteil ausgebildet sind/ist.
